(19)

Europäisches
Patentamt
European
Patent Office
Office européen
des brevets

(11) **EP 4 310 446 A1**

(12) **EUROPEAN PATENT APPLICATION**
published in accordance with Art. 153(4) EPC

(43) Date of publication:
**24.01.2024 Bulletin 2024/04**

(21) Application number: **22790767.2**

(22) Date of filing: **18.03.2022**

(51) International Patent Classification (IPC):
**G01B 11/22** $^{(2006.01)}$ **G06T 7/80** $^{(2017.01)}$

(52) Cooperative Patent Classification (CPC):
**Y02P 90/30**

(86) International application number:
**PCT/CN2022/081674**

(87) International publication number:
**WO 2022/222658 (27.10.2022 Gazette 2022/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.04.2021 CN 202110430193**

(71) Applicant: **Autel Intelligent Technology Corp., Ltd.
Shenzhen, Guangdong 518055 (CN)**

(72) Inventor: **LI, Yajun
Shenzhen, Guangdong 518055 (CN)**

(74) Representative: **Harris, Oliver John Richard
Novagraaf UK
Centrum
Norwich Research Park
Colney Lane
Norwich NR4 7UG (GB)**

(54) **GROOVE DEPTH MEASUREMENT METHOD, APPARATUS AND SYSTEM, AND LASER MEASUREMENT DEVICE**

(57)     The present application relates to the technical field of terminals, and discloses a groove depth measurement method, apparatus and system, and a laser measurement device. The method includes: acquiring a first point cloud data set of a workpiece surface; generating a gradient absolute value sequence; determining a groove edge point sequence; determining a left edge point and a right edge point of each groove; fitting a groove upper reference line of each groove according to upper plane reference points of left and right edges of each groove; and calculating the groove depth of each groove on the workpiece surface according to the groove upper reference line and a groove bottom reference point. On the one hand, the present application can better position each groove by generating the gradient absolute value sequence to generate the groove edge point sequence and further determining the left edge point and right edge point of each groove; and on the other hand, the present application can improve the accuracy of measurement by fitting the groove upper reference line of each groove and calculating, in combination with the groove bottom reference point, the groove depth of each groove on the workpiece surface.

Acquire a first point cloud data set of a workpiece surface — S1

Acquire a gradient value of each data point in the first point cloud data set to generate a gradient absolute value sequence — S2

Perform local maximum value measurement on the gradient absolute value sequence to determine a groove edge point sequence — S3

Determine a left edge point and a right edge point of each groove according to the groove edge point sequence — S4

Acquire upper plane reference points of left and right edges of each groove and a groove bottom reference point according to the left edge point and the right edge point of each groove — S5

Fit a groove upper reference line of each groove according to the upper plane reference points of the left and right edges of each groove — S6

Calculate the groove depth of each groove on the workpiece surface according to the groove upper reference line and the groove bottom reference point — S7

FIG. 2

EP 4 310 446 A1

**Description**

**CROSS-REFERENCE TO RELATED APPLICATIONS**

This application claims priority to Chinese Patent Application No. 202110430193.4, entitled "GROOVE DEPTH MEASUREMENT METHOD, APPARATUS AND SYSTEM, AND LASER MEASUREMENT DEVICE", filed on April 21, 2021, by China Patent Office, which is incorporated herein by reference in its entirety.

**TECHNICAL FIELD**

The present application relates to the field of industrial detection, in particular to a groove depth measurement method, apparatus, system and laser measurement device.

**BACKGROUND**

In industrial detection application scenarios, for example: in some scenarios, such as profile groove depth detection and workpiece surface groove depth detection, it is often necessary to measure the groove depth in the application scenario with high accuracy (up to 0.1 mm accuracy).

The traditional mechanical groove depth measurement device is not convenient for measurement, and has high requirements for the operator's operation standardization, a plurality of different values will be obtained from a plurality of measurements of the same groove by the same operator, and a plurality of different values will be obtained from a plurality of measurements of the same groove by different operators.

Some existing devices which use a computer vision technology to measure the groove depth of workpiece surface are more convenient for use than traditional mechanical groove depth measurement devices, and the requirements for the operator's normative operation are reduced. However, the current groove location, detection and groove depth calculation algorithms in these devices have serious defects. When the base of measurement device is not strictly aligned with the measured workpiece surface and there are some deviation angles, the groove on the measured workpiece surface cannot be identified, resulting in measurement failure. In addition, under some measuring angles with certain deviation, the measured groove depth value has a larger deviation from the actual groove depth value, and thus wrong values are often measured.

**SUMMARY**

The embodiments of the present application provide a groove depth measurement method, apparatus, system and laser measurement device, which can solve the technical problem of large deviation in current groove depth measurement and improve the accuracy of measurement.

In a first aspect, embodiments of the present disclosure provide a groove depth measurement method applied to a workpiece surface including a plurality of grooves, wherein the method includes:

acquiring a first point cloud data set of a workpiece surface;
acquiring a gradient value of each data point in the first point cloud data set to generate a gradient absolute value sequence;
performing local maximum value measurement on the gradient absolute value sequence to determine a groove edge point sequence;
determining a left edge point and a right edge point of each groove according to the groove edge point sequence;
acquiring upper plane reference points of left and right edges of each groove and a groove bottom reference point according to the left edge point and the right edge point of each groove;
fitting a groove upper reference line of each groove according to the upper plane reference points of the left and right edges of each groove; and
calculating the groove depth of each groove on the workpiece surface according to the groove upper reference line and the groove bottom reference point.

In some embodiments, after acquiring the first point cloud data set of the workpiece surface, the method further includes: pre-processing the first point cloud data set to generate a second point cloud data set, specifically including: performing rotation pre-processing on the first point cloud data set to generate a second point cloud data set.

In some embodiments, the performing rotation pre-processing on the first point cloud data set to generate a second point cloud data set includes:

performing filtering processing on the data points in the first point cloud data set, and determining a filtering response value of the data points;

calculating a weight value corresponding to the data point according to the filtering response value;

according to the weight value corresponding to each data point, combining position information about each data point, fitting a line, and calculating an inclination angle of the fitted line; and

performing rotation pre-processing on the first point cloud data set according to the inclination angle of the fitted line to generate a second point cloud data set.

In some embodiments, the method further includes:
performing interpolation processing on the second point cloud data set to generate a third point cloud data set.

In some embodiments, the method further includes:
performing smooth filtering processing on the third point cloud data set to generate a fourth point cloud data set.

In some embodiments, the performing local maximum value measurement on the gradient absolute value sequence to determine a groove edge point sequence includes:

determining whether a gradient absolute value of the current data point is greater than a preset absolute value threshold;

further determining whether the gradient absolute value of the current data point is a local maximum value within a preset range if the gradient absolute value of the current data point is greater than a preset absolute value threshold;

determining the current data point as a groove edge point to be determined, and adding a groove edge point sequence if the gradient absolute value of the current data point is the local maximum value within the pre-set range; and

traversing each data point in the fourth point cloud data set to determine a groove edge point sequence.

In some embodiments, the determining a left edge point and a right edge point of each groove according to the groove edge point sequence includes:

retrieving the groove edge point to be determined in the groove edge point sequence;

skipping the current data point to detect the next data point in the groove edge point sequence if the gradient value of the retrieved current data point is negative;

determining that the current data point is a left edge point of a certain groove, and the next data point of the current data point as a right edge point of the groove if the gradient value of the retrieve current data point is positive, and the gradient value of the next data point is negative; and

traversing all of the groove edge points to be determined in the groove edge point sequence until the left edge point and the right edge point for each groove are determined.

In some embodiments, the acquiring upper plane reference points of left and right edges of each groove according to the left edge point and the right edge point of each groove includes:
acquiring a preset number of data points located to the left of the left edge point as an upper plane reference point to the left of the groove, and acquiring a preset number of data points located to the right of the right edge point as an upper plane reference point to the right of the groove.

In some embodiments, the acquiring a groove bottom reference point of each groove according to the left edge point and the right edge point of each groove includes:
acquiring a data point located between the left edge point and the right edge point as a groove bottom reference point of the groove.

In some embodiments, the fitting a groove upper reference line of each groove according to the upper plane reference points of the left and right edges of each groove includes:

determining an upper plane reference point to the left of the groove as a first reference point set and determining an upper plane reference point to the right of the groove as a second reference point set;

connecting each reference point in the first reference point set with each reference point in the second reference point set to determine a plurality of reference straight lines; and

determining a groove upper reference straight line from the plurality of reference straight lines.

In some embodiments, the determining a groove upper reference straight line from the plurality of reference straight lines includes:
acquiring the number of reference points located above each of the reference straight lines, and determining the reference straight line having the least number of reference points as the groove upper reference straight line.

In some embodiments, the calculating the groove depth of each groove on the workpiece surface according to the groove upper reference line and the groove bottom reference point includes:

> calculating a distance value between each groove bottom reference point and the groove upper reference line;
> ranking the distance values from large to small, and determining a preset number of larger distance values; and
> calculating an average value of the preset number of larger distance values, and determining the average value as a groove depth of the groove.

In a second aspect, embodiments of the present application provide a groove depth measurement apparatus applied to a workpiece surface including a plurality of grooves, wherein the apparatus includes:

> a point cloud data set unit for acquiring a first point cloud data set of a workpiece surface;
> a gradient absolute value sequence unit for acquiring a gradient value of each data point in the first point cloud data set to generate a gradient absolute value sequence;
> a groove edge point sequence unit for performing local maximum value measurement on the gradient absolute value sequence to determine a groove edge point sequence;
> an edge point unit for determining a left edge point and a right edge point of each groove according to the groove edge point sequence;
> a reference point unit for acquiring upper plane reference points of left and right edges of each groove and a groove bottom reference point according to the left edge point and the right edge point of each groove;
> a reference line unit for fitting a groove upper reference line of each groove according to the upper plane reference points of the left and right edges of each groove; and
> a groove depth unit for calculating the groove depth of each groove on the workpiece surface according to the groove upper reference line and the groove bottom reference point.

In a third aspect, embodiments of the present application provide a laser measurement device including:

> at least one processor; and
> a memory communicatively connected to the at least one processor; wherein
> the memory stores an instruction executable by the at least one processor, and the instruction is executed by the at least one processor to enable the at least one processor to execute the groove depth measurement method according to the first aspect.

In a fourth aspect, embodiments of the present disclosure provide a groove depth measurement system including:

> the laser measurement device according to the third aspect for measuring a groove depth of a workpiece surface, wherein the laser measurement device includes:
> a camera for taking an image of a workpiece surface;
> a laser for projecting a laser line onto a workpiece surface.

In a fifth aspect, embodiments of the present application provide a non-volatile computer-readable storage medium storing computer-executable instructions for causing a laser measurement apparatus to perform the groove depth measurement method according to the first aspect.

In a sixth aspect, embodiments of the present application provide a computer program including program instructions which, when executed by one or more processors in a laser measurement device, cause the laser measurement device to perform the groove depth measurement method according to the first aspect.

Advantageous effects of the embodiments of the present application are: in contrast to the prior art, embodiments of the present application provide a groove depth measurement method applied to a workpiece surface, the workpiece surface including a plurality of grooves, the method including: acquiring a first point cloud data set of a workpiece surface; acquiring a gradient value of each data point in the first point cloud data set to generate a gradient absolute value sequence; performing local maximum value measurement on the gradient absolute value sequence to determine a groove edge point sequence; determining a left edge point and a right edge point of each groove according to the groove edge point sequence; acquiring upper plane reference points of left and right edges of each groove and a groove bottom reference point according to the left edge point and the right edge point of each groove; fitting a groove upper reference line of each groove according to the upper plane reference points of the left and right edges of each groove; and calculating the groove depth of each groove on the workpiece surface according to the groove upper reference line and the groove bottom reference point. On the one hand, the present application can better position each groove by generating the gradient absolute value sequence to generate the groove edge point sequence and further determining the left edge point and right edge point of each groove; and on the other hand, the present application can improve the accuracy of measurement by fitting the groove upper reference line of each groove and calculating, in combination with the groove bottom reference point, the groove depth of each groove on the workpiece surface.

**BRIEF DESCRIPTION OF THE DRAWINGS**

One or more embodiments are illustrated by way of example and not by way of limitation in the figures of the accompanying drawings, in which elements having the same reference numeral designations represent similar elements, and in which the figures are not to scale unless otherwise specified.

FIG. 1 is a schematic diagram showing a structure of a groove depth measurement system according to an embodiment of the present application;
FIG. 2 is a schematic flow diagram showing a groove depth measurement method according to an embodiment of the present application;
FIG. 3 is a schematic flow chart for performing rotation pre-processing on a first point cloud data set according to an embodiment of the present application;
FIG. 4 is a detailed flowchart of step S3 in FIG. 2;
FIG. 5 is a detailed flowchart of step S4 in FIG. 2;
FIG. 6 is a detailed flowchart of step S6 in FIG. 2;
FIG. 7 is a detailed flowchart of step S7 in FIG. 2;
FIG. 8a is a schematic diagram showing a first point cloud data set according to an embodiment of the present application;
FIG. 8b is a schematic diagram showing performing rotation pre-processing on the first point cloud data set to generate a second point cloud data set according to an embodiment of the present application;
FIG. 8c is a schematic diagram showing a third point cloud data set according to an embodiment of the present application;
FIG. 8d is a schematic diagram showing a groove edge point according to an embodiment of the present application;
FIG. 8e is a schematic diagram showing groove edge point matching according to an embodiment of the present application;
FIG. 8f is a schematic diagram showing a groove upper reference straight line fit according to an embodiment of the present application;
FIG. 8g is a schematic diagram showing groove depth according to an embodiment of the present application;
FIG. 9 is a schematic diagram showing a structure of a groove depth measurement apparatus according to an embodiment of the present application;
FIG. 10 is a schematic diagram showing a structure of a laser measurement apparatus according to an embodiment of the present application.

**DETAILED DESCRIPTION OF THE INVENTION**

For the that the objects, aspects and advantages of the present application may be more clearly understood, a more particular description of the invention, briefly summarized below, may be had by reference to the appended drawings and examples. It should be understood that the particular embodiments described herein are illustrative only and are not restrictive. Based on the embodiments in the present application, all other embodiments obtained by a person skilled in the art without involving any inventive effort are within the scope of protection of the present application.

It should be noted that, if not in conflict, the various features of the embodiments of the present application may be combined with of the present application. In addition, although the division of functional modules is illustrated in a schematic diagram showing an apparatus and a logical order is illustrated in a flowchart, in some cases, the steps illustrated or described may be performed in an order other than the division of the modules the apparatus or in the flowchart. Furthermore, the words "first", "second", "third", and the like, as used herein do not limit the data and order of execution, but merely distinguish the same item or similar item having substantially the same function or action.

Before describing the present application in detail, the names and terms referred to in the embodiments of the present application will be explained as follows.

(1) Point cloud data refers to scanning data to be recorded in the form of points. Each point contains three-dimensional coordinates, and some points may contain color information or reflection intensity information. The point cloud data has Intensity information besides geometric position. Intensity information is acquired by receiving the echo intensity collected by the apparatus. This intensity information is related to the surface material, roughness and direction of the target as well as the emission energy and laser wavelength of the instrument.

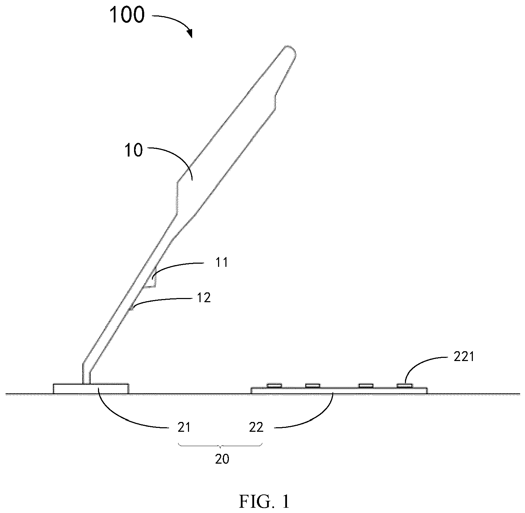

Referring to FIG. 1, FIG. 1 is a schematic diagram showing a groove depth measurement system according to an embodiment of the present invention;

as shown in FIG. 1, the groove depth measurement system 100 includes:
a laser measurement device 10, a workpiece 20 and a support (not shown), the laser device 10 being fixed to the support.

The laser measurement device includes: a laser 11 and a camera 12, wherein the laser 11 and the camera 12 are both fixed on the support, wherein the laser measurement device further includes devices such as a light supplement lamp, an optical filter, a posture adjusting apparatus, a host, a display system, a power supply and a base. The host may run a variety of platforms such as Linux, Android, and Windows.

The workpiece 20 includes a base area 21 and a groove area 22, wherein the base area includes a base table, the posture adjusting apparatus is arranged where the base table is located, and the groove area includes a plurality of grooves with different depths. It will be appreciated that the laser may be a laser of various wavelength bands, such as a red 650 nm band, a green 520 nm band, etc.

With regard to the above-mentioned groove area of the workpiece 20, the groove area includes a plurality of grooves of different depths and a background area, wherein the colors of the groove area and the background area are different. In some embodiments, the background area may also be coated with a reflective material to increase the reflective function of the background area, while the reflective function of the groove area is weaker than the reflective function of the background area, such that the imaging of the groove area and the background area in the camera is more distinct, thereby allowing the camera to obtain a high quality image.

With the laser and the camera described above, since both the laser and the camera are fixed to the support, the positions of the laser and the camera are fixed relative to each other, and when the support moves, the camera and the laser move synchronously. Since the camera and the laser move synchronously, the position of the laser in the camera coordinate system of the camera does not change, and likewise the position of the laser plane output by the laser in the camera coordinate system does not change.

Note that a shooting direction of the camera forms a fixed angle with the laser plane where the laser output by the laser is located, and optionally, the fixed angle is in the range of 25-30 degrees. When the support moves in a vertical direction, the position of the intersection line where the target intersects with the laser plane output by the laser is different, and likewise, when the target moves in a vertical direction, the position of the intersection line where the target intersects with the laser plane output by the laser is different.

Be noted that since the positions of the laser and the camera are relatively fixed, the position of the laser plane output by the laser in the camera coordinate system of the camera is also fixed, even if the support is moved, the position of the laser plane in the camera coordinate system will not be affected; the laser measurement device is placed in the base area of the target, the line laser projects perpendicularly to the groove area on the target, the camera deviates a certain angle from the laser projection direction to take a picture, and the depth of the groove on the workpiece can be measured through a laser triangulation principle; and the laser measurement device in the present application includes a monocular laser measuring device, a laser range finder, a laser level, a laser (three-dimensional) profile measuring instrument, a laser caliper and other electronic devices.

The groove depth measurement method provided in the present application will be described in detail with reference to the accompanying drawings.

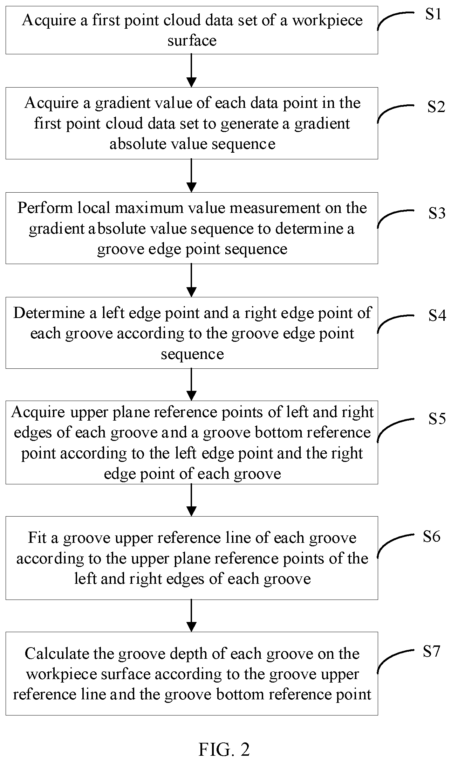

Referring to FIG. 2, FIG. 2 is a schematic flow chart of a groove depth measurement method according to an embodiment of the present application;
the groove depth measurement method is applied to the above-mentioned laser measurement device, in particular, the execution body of the groove depth measurement method is one or more processors of the above-mentioned laser measurement device.

As shown in FIG. 2, the groove depth measurement method includes:

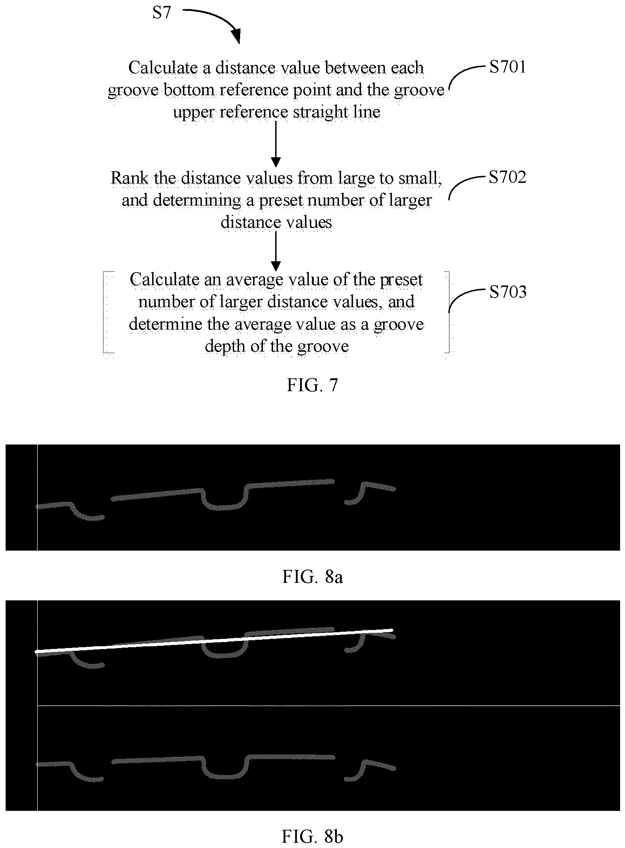

step S1: acquire a first point cloud data set of a workpiece surface;
specifically, the laser measurement device includes a laser and a camera, wherein the laser projects a laser line to project onto a workpiece surface of the workpiece to be measured, and the camera captures an image; the processor acquires an image captured by the camera, extracts central coordinates of the laser line from the image, and then performs coordinate transformation on the extracted central coordinates via calibration parameters of the laser measurement device to obtain a first point cloud data set $L_1 = \{p_i \mid p_i = (x_i, y_i), i = 1,..., N_1\}$ of the surface of the workpiece to be measured in a laser plane, wherein $p_i$ is the $i^{th}$ point in the first point cloud data set, and $(x_i, y_i)$ is the $X$ coordinate and the $Y$ coordinate of the point $p_i$. With reference to FIG. 8a, FIG. 8a is a schematic diagram showing a first point cloud data set according to an embodiment of the present application.

In an embodiment of the present invention, the center coordinate extraction of the laser line is extracted by a laser line extraction algorithm, for example: laser line center extraction algorithm based on a Gaussian Fitting method. Calibration parameters of the laser measurement device include camera internal parameters, camera distortion parameters and laser plane parameters.

The coordinates of the laser line center obtained by the laser line center extraction algorithm are based on the pixel coordinate system, with the coordinate origin at an upper left corner of the image. The image shot by the device is distorted, so the laser line center coordinate sequence extracted from the original image is also distorted. We need to use the camera internal parameters and camera distortion parameters to perform distortion correction processing on the original laser line center coordinate containing distortion, to obtain the laser line center coordinate set after distortion removal.

After obtaining the coordinates of the laser line center after distortion correction, firstly, the coordinates of the laser line center after distortion correction (pixel coordinate system) is performed coordinate transformation using the camera internal parameters and laser plane parameters, and the 3D coordinate value (3D point located on the laser plane) of the laser line center in the camera coordinate system is calculated. Then the coordinate system of the 3D laser line center located in the camera coordinate system is performed coordinate system rotation transformation to obtain a coordinate value of the laser line center in the laser plane coordinate system, the origin of the laser plane coordinate system is located on the laser plane, the laser plane coincides with the x-O-y plane, and the z axis is perpendicular to the laser plane. The z coordinate value of the laser line center coordinate in the laser plane coordinate system is discarded, and only the x and y coordinates are retained, i.e. a 2D laser line center coordinate sequence in the laser plane is obtained.

Specifically, the performing coordinate transformation on the extracted central coordinate by a calibration parameter of a laser measurement device includes:

> step (1): laser line center coordinates are performed distortion correction;
> step (2): a 3D laser line center coordinate in a camera coordinate system is calculated;
> step (3): a 2D coordinate on a laser plane is determined according to a 3D laser line center coordinate in a camera coordinate system;

Specifically, the step (1): laser line center coordinates are performed distortion correction includes:
the camera internal reference matrix and the camera distortion parameters are obtained by a camera calibration algorithm.

$$M = \begin{bmatrix} f_x & 0 & c_x \\ 0 & f_y & c_y \\ 0 & 0 & 1 \end{bmatrix}$$

The internal reference matrix of the camera is ⎡ above ⎤ : the camera distortion parameters are: $D = [k_1 \ k_2 \ k_1 \ k_2 \ k_3]$.

The camera distortion model is: the ideal pixel coordinate without distortion is $(u, v)$, and the pixel coordinate with distortion is $(u', v')$. The relationship between the two is: when the ideal image coordinate $(x, y)$,

$$x = \frac{u - c_x}{f_x}, \quad y = \frac{v - c_y}{f_y}$$

is obtained from the ideal pixel coordinate $(u, v)$, the corresponding image coordinate $(x', y')$ containing distortion is:

$$x' = x(1 + k_1 r^2 + k_2 r^4 + k_3 r^6) + 2p_1 xy + p_2(r^2 + 2x^2)$$

$$y' = y(1 + k_1 r^2 + k_2 r^4 + k_3 r^6) + p_1(r^2 + 2y^2) + 2p_2 xy$$

wherein, $r^2 = x^2 + y^2$. Then the pixel coordinate $(u', v')$ : $u' = x'f_x + c_x$, $v' = y'f_y + c_y$ containing distortion is calculated from the image coordinate $(x', y')$ containing distortion.

Since the extracted coordinate $(u', v')$ of the laser line center is a pixel coordinate containing distortion, it is necessary to calculate the corresponding pixel coordinate after removing the distortion according to the above-mentioned camera distortion model. Specifically, the corresponding pixel coordinates after distortion removal are output through a distortion correction function in a preset function library, for example: the preset function library is an opencv library, and through the distortion correction function cv::undistortPoints(inputVec, outputVec, m_CameraM, m_CameraD, cv::noArray(), m_CameraM) in the opencv library, inputVec is the laser line center coordinate sequence $(u', v')$ containing distortion, m_CameraM is the camera internal reference matrix $M$, m_CameraD is the camera distortion parameter matrix $D$, and outputVec is the output laser line center coordinate sequence $(u, v)$ after distortion removal.

It can be understood that it is difficult to solve the ideal pixel coordinate $(u, v)$ without distortion from the pixel coordinate $(u', v')$ containing distortion according to the distortion model formula, so the distortion correction function cv::undistortPoints in the opencv library is solved iteratively by setting initial values.

Specifically, the step (2): a 3D laser line center coordinate in a camera coordinate system is calculated includes:

The laser plane parameter obtained by calibration is $L = [l_1\ l_2\ l_3\ l_4]$, denoted as $m_1 = -\dfrac{l_1}{l_3}$, $m_2 = -\dfrac{l_2}{l_3}$, and

$m_3 = -\dfrac{l_4}{l_3}$. Then, the 3D coordinate in the camera coordinate system corresponding to the point where the laser line center coordinate is $(u, v)$ is $(x_1, y_1, z_1)$, $z_1 = \dfrac{m_3}{1 - m_1 \dfrac{u - c_x}{f_x} - m_2 \dfrac{v - c_y}{f_y}}$, $x_1 = z_1 \dfrac{u - c_x}{f_x}$, and $y_1 = z_1 \dfrac{v - c_y}{f_y}$, where $(x_1, y_1, z_1)$ is the 3D coordinate of the laser line center located on the laser plane in the camera coordinate system.

Specifically, the step (3): a 2D coordinate on a laser plane is determined according to a 3D laser line center coordinate in a camera coordinate system includes:

the coordinates of the origin of the laser plane coordinate system is denoted as $N_O = (0, 0, -\dfrac{l_4}{l_3})$ (it is the coordinate value of the origin of the new coordinate system in the camera coordinate system). $-\dfrac{l_4}{l_3}$ is a $z$ coordinate of the intersection of the laser plane and an $z$ axis of the camera coordinate system.

The 3D coordinate $(x_1, y_1, z_1)$ of the laser line center in the camera coordinate system is translated to obtain

$(x_2, y_2, z_2) = (x_1, y_1, z_1) - (0, 0, -\dfrac{l_4}{l_3})$.

Assume that the rotation matrix between the camera coordinate system and the laser plane coordinate system is $R_{3\times3}$, assume that the origin of the camera coordinate system is $O^1 = (O_x^1, O_y^1, O_z^1) = (0, 0, 0)$, the direction vector of the X-axis positive direction is $V_x^1 = (V_{x1}^1, V_{x2}^1, V_{x3}^1) = (1, 0, 0)$, the direction vector of the Y-axis positive direction is $V_y^1 = (V_{y1}^1, V_{y2}^1, V_{y3}^1) = (0, 1, 0)$, and the direction vector of the Z-axis positive direction is

$V_z^1 = (V_{z1}^1, V_{z2}^1, V_{z3}^1) = (0, 0, 1)$.

The normal vector of the YOZ plane of the camera coordinate system is the direction vector $V_x^1$ of the positive direction of the X-axis, and normal vector of laser plane is $V_L=(l_1,l_2,l_3)$, the direction vector $V_y^2 = V_x^1 \times V_L$ of the intersection line between the YOZ plane and the laser plane of the camera coordinate system, wherein $\times$ represents an cross multiplication operation of the vectors.

Let the origin of laser plane coordinate system be $O^2 = (O_x^2, O_y^2, O_z^2) = (0,0,0)$, the direction vector of X-axis positive direction be $V_x^2 = (V_{x1}^2, V_{x2}^2, V_{x3}^2) = (1,0,0)$, the direction vector of Y-axis positive direction be $V_y^2 = (V_{y1}^2, V_{y2}^2, V_{y3}^2)$, and the direction vector of Z-axis positive direction be $V_z^2 = (V_{z1}^2, V_{z2}^2, V_{z3}^2) = V_x^2 \times V_y^2$.

$$R_{3\times3} = \begin{bmatrix} V_{x1}^1 & V_{x2}^1 & V_{x3}^1 \\ V_{y1}^1 & V_{y2}^1 & V_{y3}^1 \\ V_{z1}^1 & V_{z2}^1 & V_{z3}^1 \end{bmatrix} \cdot \begin{bmatrix} V_{x1}^2 & V_{x2}^2 & V_{x3}^2 \\ V_{y1}^2 & V_{y2}^2 & V_{y3}^2 \\ V_{z1}^2 & V_{z2}^2 & V_{z3}^2 \end{bmatrix}^{-1}$$

The rotation matrix is .

The coordinate system rotation matrix $R_{3\times3}$ is used to perform rotation transformation on the translated 3D

$$\begin{bmatrix} x_3 \\ y_3 \\ z_3 \end{bmatrix} = R_{3\times3} \cdot \begin{bmatrix} x_2 \\ y_2 \\ z_2 \end{bmatrix}$$

point ($x_2$, $y_2$, $z_2$) to obtain the coordinate ($x_3$, $y_3$, $z_3$), of the laser line center in the laser plane coordinate system, and the $Z$-axis coordinate $z_3$ of the laser line center in the laser plane coordinate system is discarded, and then the 2D point cloud coordinate ($x_3$, $y_3$) of the laser line in the laser plane coordinate system is obtained.

After acquiring the first point cloud data set of the workpiece surface, the method further includes: pre-processing the first point cloud data set to generate a second point cloud data set.

Specifically, the pre-processing the first point cloud data set to generate a second point cloud data set includes: performing rotation pre-processing on the first point cloud data set to generate a second point cloud data set.

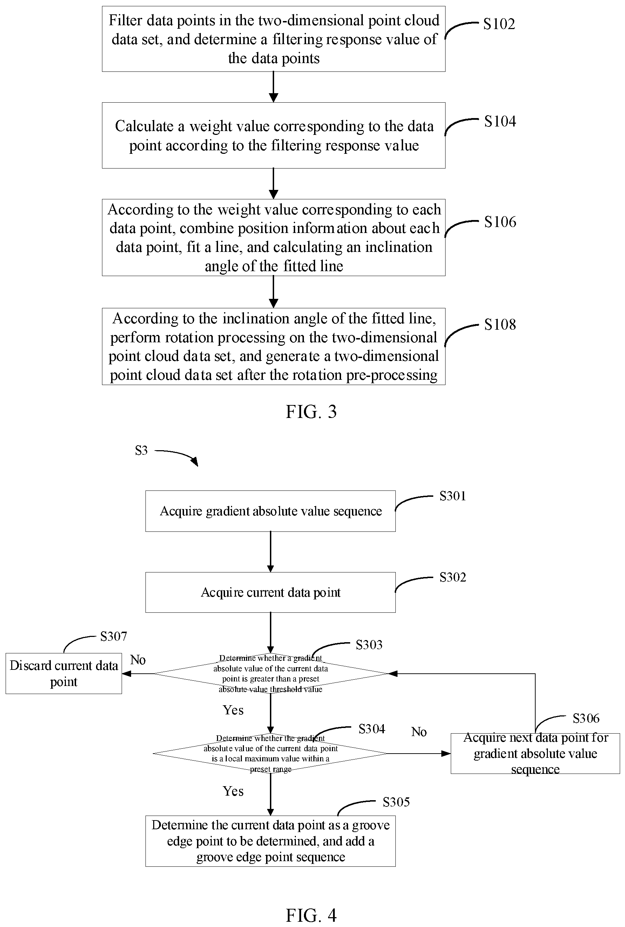

Referring back to FIG. 3, FIG. 3 is a schematic flow chart for performing rotation pre-processing on a second point cloud data set according to an embodiment of the present application;

as shown in FIG. 3, the performing rotation pre-processing on the first point cloud data set includes:

step S102: perform filtering processing on the data points in the first point cloud data set, and determine a filtering response value of the data points;

specifically, the first point cloud data set is performed filtering processing via a filter, and a filtering response value of each data point is determined, for example: the first point cloud data set $L_1$ is subjected to filtering processing by using a first-order Gaussian partial derivative filter with a filtering kernel size of $k_1$, and a filtering response value is determined, wherein the magnitude of the absolute value of the filtering response value of each data point represents the degree of an included angle between the local neighbor line segment of the data point and the horizontal direction, the closer to the horizontal direction, the smaller the filtering response value (if the local neighbor line segment is a horizontal line segment, the response value is 0), the closer to the vertical direction, the larger the filtering response value, and it is assumed that the absolute value of the first-order Gaussian partial derivative filtering response value of the point $p_i$ is $r_i$.

Step S104: calculate a weight value corresponding to the data point according to the filtering response value; specifically, a Gaussian function with a mean value of 0 and a variance of σ is used to calculate a weight value

$$w_i = \frac{1}{\sqrt{2\pi}\sigma} e^{-\frac{r_i^2}{2\sigma^2}}$$

corresponding to each data point based on the filtering response value.

Step S106: According to the weight value corresponding to each data point, combine position information about each data point, fit a line, and calculate an inclination angle of the fitted line;

specifically, $w_i$ is taken as a weight value of each data point in the first point cloud data set, a weighted least squares method is used to fit a line, and an inclination angle $\alpha$ of the fitted line is calculated.

Step S108: Rotate the first point cloud data set according to the inclination angle of the fitted line to generate a second point cloud data set;

specifically, the first point cloud data set $L_1$ is c input at its midpoint and rotated by an angle $-\alpha$ to obtain a two-dimensional point cloud data set $L_2$ of which the upper surface of the measured workpiece is close to horizontal.

For example: assume that the coordinate of a data point in a first point cloud data set $L_1$ is $(x_1, y_1)$, and the coordinate of a data point corresponding thereto in a second point cloud data set $L_2$ after rotation transformation is $(x_2, y_2)$, performing rotation processing on each data point in the first point cloud data set to generate a second point cloud data set, wherein the rotation method includes:

$$x_2 = x_1 \cdot \cos(\alpha) - y_1 \cdot \sin(\alpha)$$

$$y_2 = x_1 \cdot \sin(\alpha) + y_1 \cdot \cos(\alpha)$$

with reference to FIG. 8b, FIG. 8b is a schematic diagram showing performing rotation pre-processing on the first point cloud data set to generate a second point cloud data set according to an embodiment of the present application.

In an embodiment of the present application, the method further includes:

performing interpolation processing on the second point cloud data set to generate a third point cloud data set.

It can be understood that, in the second point cloud data set $L_2$, the resolution in the X direction is not equal, i.e., the difference between the X coordinates of all the adjacent two 2D point cloud points is not a fixed value, and some areas cause the point cloud data to be disconnected due to factors such as occlusion, which is not conducive to groove depth calculation; therefore, interpolation processing is required to unify the resolution, and the difference between the X coordinates of all the adjacent two 2D point cloud points is a fixed value, which is conducive to groove depth detection.

Specifically, the second point cloud data set $L_2$ is subjected to sampling interpolation processing at equal intervals along the direction $X$ with a stride pitch of s to obtain a third point cloud data set $L_3$ with uniform and continuous resolution.

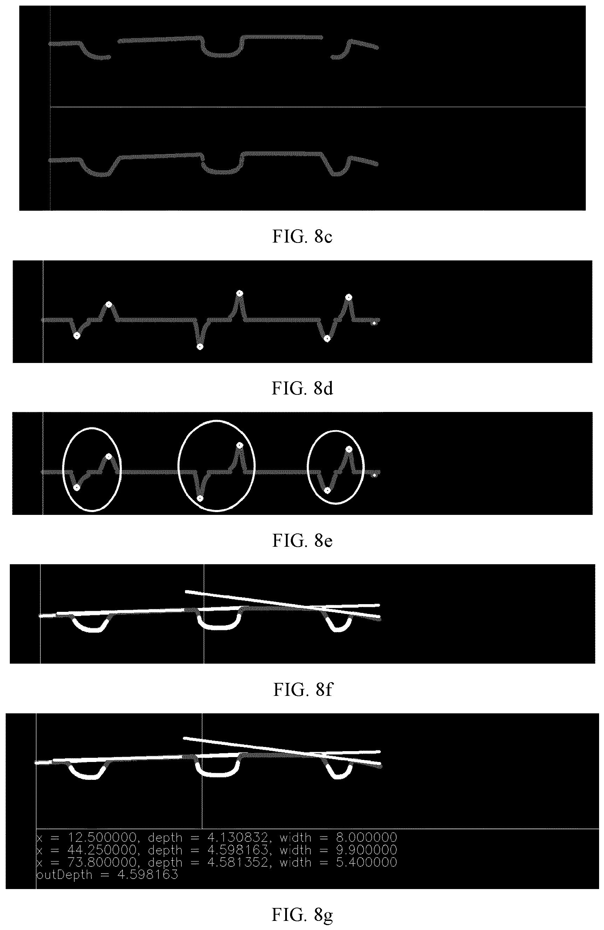

With reference to FIG. 8c, FIG. 8c is a schematic diagram showing a third point cloud data set according to an embodiment of the present application.

In an embodiment of the present application, the method further includes:

performing smooth filtering processing on the third point cloud data set to generate a fourth point cloud data set.

It can be understood that since the algorithm has a certain glitch noise, in order to improve the stability of the algorithm and the robustness to the glitch noise, a smoothing filtering process needs to be performed on the third point cloud data set $L_3$ to reduce the noise.

Specifically, a Gaussian filter with a small filtering kernel is used to perform a plurality of filtering to complete a smoothing filtering process, and the original shape information about the groove edge can be maintained while filtering out small burr noise, for example: the third point cloud data set $L_3$ is subjected to $m$ times of filtering processing via a Gaussian filtering kernel with the filtering kernel size being $k_2$ to obtain a fourth point cloud data set $L_4$, wherein the fourth point cloud data set $L_4$ is a point cloud data set after smoothing filtering processing.

Step S2: Acquire a gradient value of each data point in the first point cloud data set to generate a gradient absolute value sequence;

specifically, the fourth point cloud data set $L_4$ is subjected to filtering processing via a Gaussian first-order partial derivative filtering with a filtering kernel size of $k_3$ to obtain a gradient value of each data point of the fourth point cloud data set $L_4$ in an X direction, and an absolute value is obtained for the gradient value of each data point, thereby generating a gradient absolute value sequence. For example: assume that the Gaussian first-order partial derivative filter kernel with the filter kernel size $k_3 = 3$ is $[F_1\ F_2\ F_3]$, and the gradient value $G_i$ of the $i^{th}$ data point is currently calculated, then $G_i = F_1 \cdot y_{i-1} + F_2 \cdot y_i + F_3 \cdot y_{i+1}$, where $y_i$ is a y coordinate value of the $i^{th}$ data point, and $y_{i-1}$ and $y_{i+1}$ are the y coordinate value of the preceding data point and the following data point, respectively. It will be appreciated that there is a greater gradient absolute value at an edge position of the groove.

Step S3: Perform local maximum value measurement on the gradient absolute value sequence to determine a groove edge point sequence;

specifically, please refer back to FIG. 4, and FIG. 4 is a detailed flowchart of step S3 in FIG. 2;

as shown in FIG. 4, this step S3: the performing local maximum value measurement on the gradient absolute value sequence to determine a groove edge point sequence includes:

Step S301: acquire gradient absolute value sequence;

wherein the gradient absolute value sequence is performed local maximum value detection, and a possible groove edge point position is located for determining the groove edge point sequence.

Step S302: acquire a current data point;

Step S303: determine whether a gradient absolute value of the current data point is greater than a preset absolute value threshold;

specifically, a gradient absolute value of a current data point is acquired, and whether the gradient absolute value of the current data point is greater than a preset absolute value threshold $t_1$ is determined, and if so, then proceeding to step S304: determine whether the current data point is a local maximum value within a pre-set range; if not, then proceeding to step S307: discard the current data point; wherein the preset absolute value threshold $t_1$ is set according to specific requirements, and the preset range refers to a range of $q$ points in the front and back, wherein $q$ is a positive integer.

Step S304: Determine whether the gradient absolute value of the current data point is a local maximum value within a preset range;

specifically, it is determined whether the absolute value of the gradient of the current data point is the maximum value within the range of $q$ points in the front and back, and if so, proceeding to step S305: determine a current data point as a groove edge point to be determined, and add a groove edge point sequence; if not, acquire the next data point of the gradient absolute value sequence;

Step S305: determine the current data point as a groove edge point to be determined, and add a groove edge point sequence;

Step S306: acquire next data point for gradient absolute value sequence;

specifically, a next data point of a gradient absolute value sequence is acquired, the next data point is taken as a current data point, and whether the gradient absolute value of the current data point is greater than a preset absolute value is cyclically determined until each data point in the fourth point cloud data set is traversed to determine a groove edge point sequence $E = \{e_i | i = 1,...,N_2\}$, wherein $e_i$ is an index value of a $i$ gradient local maximum value point in the fourth point cloud data set $L_4$, and $N_2$ is the number of data points of the groove edge point sequence.

Reference is now made to FIG. 8d, FIG. 8d is a schematic diagram showing a groove edge point according to an embodiment of the present application.

In the embodiments of the present application, by firstly determining whether the gradient absolute value thereof is greater than a preset absolute value threshold $t_1$ for the current data point, if it is, it is further checked whether the current data point is a local maximum within a range of $q$ points in the front and back, and if it is, the current data point is a possible groove edge point position, same is added to a groove edge point sequence, and all the possible groove edge point positions are recorded to generate a groove edge point sequence $E = \{e_i | i = 1,...,N_2\}$, wherein $e_i$ is an index value of an $i^{th}$ gradient local maximum point in a fourth point cloud data set $L_4$; and the present application can better determine the groove edge point sequence, which is beneficial to determine a left edge point and a right edge point of a groove, and then determine the position of the groove.

Step S4: Determine a left edge point and a right edge point of each groove according to the groove edge point sequence;

it can be understood that when matching groove edge points, the left edge point of a standard groove is a local maximum point with a positive gradient value, and the right edge point thereof is a local maximum point with a negative gradient value, wherein the gradient value of the left edge point is positive because the y coordinate value of the point on the left side of the left edge point is greater than the y coordinate value of the point on the right side thereof, and the y coordinate value of the point on the left side minus the y coordinate value of the point on the right side is greater than 0; the right edge point gradient value is negative because the y coordinate value of the point to the left of the right edge point is smaller than the y coordinate value of the point to the right thereof, and the y coordinate value of the point to the left minus the y coordinate value of the point to the right is smaller than 0.

It can be understood that the groove edge point sequence is a gradient absolute value local maximum value sequence, i.e., each data point in the groove edge point sequence is a local maximum value, and in the gradient absolute value local maximum value sequence, a positive local maximum value point and a negative local maximum value point constitute a left and right matched edge point pair of a standard groove, so that left and right edge points of each groove can be detected.

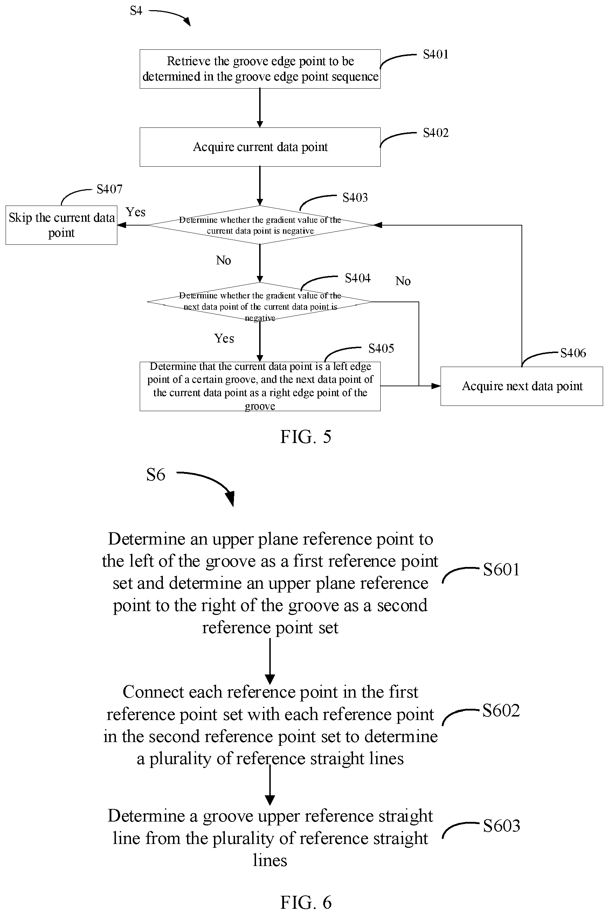

Specifically, referring again to FIG. 5, and FIG. 5 is a detailed flow chart of step S4 in FIG. 2;

as shown in FIG. 5, this step S4: determine a left edge point and a right edge point of each groove according to the groove edge point sequence includes:

Step S401: retrieve the groove edge point to be determined in the groove edge point sequence;

wherein before retrieve, each groove edge point in the groove edge point sequence is a groove edge point to be determined.

Step S402: Acquire a current data point;

specifically, a groove edge point in the groove edge point sequence is acquired as a current data point.

Step S403: Determine whether the gradient value of the current data point is negative;

specifically, if the gradient value of the retrieved current data point is negative, proceeding to step S403: skip the current data point to detect the next data point in the groove edge point sequence; if the gradient value of the current data point is not negative, proceeding to step S404: determine whether the gradient value of the next data point of the current data point is negative;

Step S404: determine whether the gradient value of the next data point of the current data point is negative;

specifically, if the gradient value of the next data point of the current data point is negative, proceeding to step S405: determine that the current data point is the left edge of a certain groove, and the next data point of the current data point is the right edge point of the groove; if the gradient value of the next data point of the local data point is not negative, proceeding to step S406: acquire a next data point;

Step S405: determine that the current data point is a left edge point of a certain groove, and the next data point of the current data point as a right edge point of the groove;

Step S406: acquire next data point;

specifically, the next data point of the current data point is acquired, and the next data point is taken as the current data point, to return to step S403: determine whether the gradient value of the current data point is negative;

Step S407: skip the current data point;

Specifically, the current data point is skipped to detect the next data point in the groove edge point sequence. traversing all of the groove edge points to be determined in the groove edge point sequence until the left edge point and the right edge point for each groove are determined.

Specifically, the groove edge point sequence includes a plurality of groove edge points to be determined, and the groove edge points to be determined in the groove edge point sequence $E = \{e_i | i = 1,...N_2\}$ are processed one by one from the front to the back, if the gradient value of the current groove edge point to be determined is negative, the next groove edge point to be determined is skipped to be processed, if the gradient value of the current groove edge point to be determined is positive, whether the gradient value of the next groove edge point to be determined is negative is checked, and if it is negative, the two points constitute a left and right matched edge point pair of a standard groove, and the left and right edge points of the standard groove are stored as $G = \{(e_j, e_{j+1}) | j \in \{1,...,N_2\text{-}1\}\}$; if the gradient value of the next groove edge point to be determined of the current point is positive, the current groove edge point to be determined is skipped to process the next groove edge point to be determined, so that all the groove edge points to be determined in the groove edge point sequence are traversed until the left edge point and the right edge point of each groove are determined.

Reference is now made to FIG. 8e, FIG. 8e is a schematic diagram showing groove edge point matching according to an embodiment of the present application.

Step S5: Acquire upper plane reference points of left and right edges of each groove and a groove bottom reference point according to the left edge point and the right edge point of each groove;

according to the detected left edge point and right edge point of each standard groove, the groove bottom reference point and the upper plane reference points of the left and right sides of the groove are extracted.

Specifically, the acquiring a groove bottom reference point of each groove according to the left edge point and the right edge point of each groove includes: acquiring a data point located between the left edge point and the right edge point as a groove bottom reference point of the groove.

For example: with regard to a standard groove $(e_j, e_{j+1})$, all the points in the fourth point cloud data set $L_4$ with an index value greater than $e_j$ and less than $e_{j+1}$ are extracted to form a reference point set $M = \{p_i | e_j < i < e_{j+1}\}$ at the bottom of the groove, which is equivalent to taking all the data points between the $e_j{}^{th}$ point and the $e_{j+1}{}^{th}$ point in the fourth point cloud data set $L_4$, for example, if $e_j$=40, $e_{j+1}$=80, then taking the data points 41, 42, ..., 78, 79 in the fourth point cloud data set $L_4$.

Specifically, according to the left edge point and the right edge point of each groove, acquiring upper plane reference points of the left and right sides of each groove includes: acquiring a preset number of data points located to the left of the left edge point as an upper plane reference point to the left of the groove, and acquiring a preset number of data points located to the right of the right edge point as an upper plane reference point to the right of the groove.

For example: assume that the preset number is n, all the points in the fourth point cloud data set $L_4$ with an index value being less than $e_j$ and greater than $e_j - n$ are extracted to form an upper plane reference point set $M_1 = \{p_i | e_j - n < i < e_j\}$ on the left side of the groove, and all the points in the fourth point cloud data set $L_4$ with an index value being greater than $e_{j+1}$ and less than $e_{j+1}+n$ are extracted to form an upper plane reference point set $M_2 = \{p_i | e_{j+1} < i < e_{j+1}+n\}$ on the right side of the groove. Wherein n is an algorithm parameter, n is a positive integer and the value of n is set according to specific requirements, for example: set n = 40, 50, 60, etc.

Step S6: Fit a groove upper reference line of each groove according to the upper plane reference points of the left and right edges of each groove;

specifically, please refer back to FIG. 6, and FIG. 6 is a detailed flowchart of step S6 in FIG. 2;

As shown in FIG. 6, this step S6: fit a groove upper reference line of each groove according to the upper plane reference points of the left and right edges of each groove includes:

Step S601: determining an upper plane reference point to the left of the groove as a first reference point set and determine an upper plane reference point to the right of the groove as a second reference point set;

specifically, all the points in the fourth point cloud data set $L_4$ with an index value being less than $e_j$ and greater than $e_j - n$ are extracted to form an upper plane reference point set $M_1 = \{p_i|e_j - n < i < e_j\}$ on the left side of the groove, and all the points in the fourth point cloud data set $L_4$ with an index value being greater than $e_{j+1}$ and less than $e_{j+1}+n$ are extracted to form an upper plane reference point set $M_2 = \{p_i \mid e_{j+1} < i < e_{j+1}+n\}$ on the right side of the groove.

Step S602: Connect each reference point in the first reference point set with each reference point in the second reference point set to determine a plurality of reference straight lines;

specifically, a reference straight line is fitted across the upper portion of the groove based on each of the upper planar reference point sets $M_1$ and $M_2$ on the left and right sides of the groove. For example: each point in the first reference point set $M_1$ is matched one by one with each point in the second reference point set $M_2$, then all pairs of matched points are processed one by one, and a line $l$ passing through two matched points is calculated to determine a plurality of reference straight lines.

Step S603: Determine a groove upper reference straight line from the plurality of reference straight lines.

Specifically, the determining a groove upper reference straight line from the plurality of reference straight lines includes:

acquiring the number of reference points located above each of the reference straight lines, and determining the reference straight line having the least number of reference points as the groove upper reference straight line. For example: the number of points above the line $l$ in the reference point sets $M_1$ and $M_2$ is checked and counted, and if the total number of points above the line $l$ is 0, the current line $l$ is a tangent line across the upper plane of the groove, and is denoted as an upper reference straight line $l$.

Reference is now made to FIG. 8f, FIG. 8f is a schematic diagram showing the groove upper reference straight line fit according to an embodiment of the present application.

Step S7: Calculate the groove depth of each groove on the workpiece surface according to the groove upper reference line and the groove bottom reference point;

specifically, referring again to FIG. 7, FIG. 7 is a detailed flowchart of step S7 in FIG. 2;

as shown in FIG. 7, this step S7: calculating the groove depth of each groove on the workpiece surface according to the groove upper reference line and the groove bottom reference point includes:

Step S701: calculating a distance value between each groove bottom reference point and the groove upper reference line;

specifically, a distance value between each groove bottom reference point and the groove upper reference line is calculated according to each bottom reference point in the groove bottom reference point set $M = \{p_i \mid e_j < i < e_{j+1}\}$ of each groove and the groove upper reference straight line $l_t$ corresponding to the groove.

Step S702: ranking the distance values from large to small, and determining a preset number of larger distance values; and

specifically, all the distance values are sorted from large to small, and a preset number of larger distance values are determined, for example: assume that the pre-set number is $a$, $a$ larger distance values are taken, wherein $a$ is a positive integer and $a \geq 3$, and the larger pre-set number of distance values refers to the first $a$ distance values in an order from large to small. It will be appreciated that $a$ may be set according to particular needs, but that $a$ is less than the total number of calculated distance values.

Step S703: Calculate an average value of the preset number of larger distance values, and determine the average value as a groove depth of the groove;

Specifically, an average value $d$ is obtained for $a$ distance values corresponding to each groove, and the average value $d$ is taken as the groove depth of the groove.

Reference is now made to FIG. 8g, FIG. 8g is a schematic diagram showing groove depth according to an embodiment of the present application.

In an embodiment of the present application, a groove depth measurement method is provided tp be applied to a workpiece surface including a plurality of grooves, wherein the method includes: acquiring a first point cloud data set of a workpiece surface; acquiring a gradient value of each data point in the first point cloud data set to generate a gradient absolute value sequence; performing local maximum value measurement on the gradient absolute value sequence to determine a groove edge point sequence; determining a left edge point and a right edge point of each groove according to the groove edge point sequence; acquiring upper plane reference points of left and right edges of each groove and a groove bottom reference point according to the left edge point and the right edge point of each groove; fitting a groove upper reference line of each groove according to the upper plane reference points of the left and right edges of each groove; and calculating the groove depth of each groove on the workpiece surface according to the groove upper reference line and the groove bottom reference point. On the one hand, the present application can better position each groove by generating the gradient absolute value sequence to generate the groove edge point sequence and further determining the left edge point and right edge point of each groove; and on the other hand, the present application can improve the accuracy of measurement by fitting the groove upper reference line of each groove and calculating, in combination with the groove bottom reference point, the groove depth of each groove on the workpiece surface.

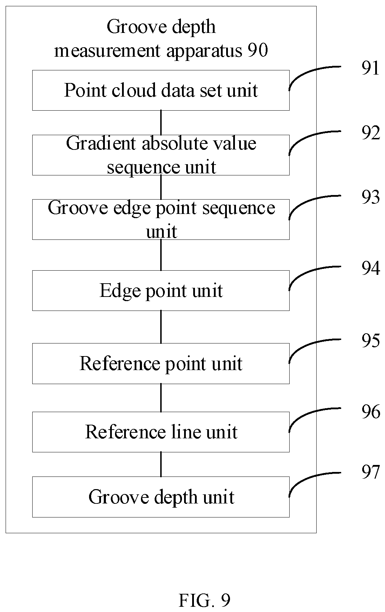

Reference is also made to FIG. 9, FIG. 9 is a schematic diagram showing a structure of a groove depth measurement apparatus according to an embodiment of the present application;

The groove depth measurement apparatus is applied to a workpiece surface including a plurality of grooves; as shown in FIG. 9, the groove depth measurement apparatus 90 includes:

a point cloud data set unit 90 for acquiring a first point cloud data set of a workpiece surface;

a gradient absolute value sequence unit 91 for acquiring a gradient value of each data point in the first point cloud data set to generate a gradient absolute value sequence;

a groove edge point sequence unit 92 for performing local maximum value measurement on the gradient absolute value sequence to determine a groove edge point sequence;

an edge point unit 93 for determining a left edge point and a right edge point of each groove according to the groove edge point sequence;

a reference point unit 94 for acquiring upper plane reference points of left and right edges of each groove and a groove bottom reference point according to the left edge point and the right edge point of each groove;

a reference line unit 95 for fitting a groove upper reference line of each groove according to the upper plane reference points of the left and right edges of each groove; and

a groove depth unit 96 for calculating the groove depth of each groove on the workpiece surface according to the groove upper reference line and the groove bottom reference point.

It should be noted that the above-mentioned apparatus can execute the groove depth measurement method provided by the embodiments of the present application, and has functional modules and advantageous effects corresponding to the execution method. Details of techniques not described in detail in the apparatus examples can be found in the groove depth measurement methods provided in the examples of this application.

In an embodiment of the present application, a groove depth measurement apparatus is provided to be applied to a workpiece surface including a plurality of grooves, wherein the apparatus includes: a point cloud data set unit for acquiring a first point cloud data set of a workpiece surface; a gradient absolute value sequence unit for acquiring a gradient value of each data point in the first point cloud data set to generate a gradient absolute value sequence; a groove edge point sequence unit for performing local maximum value measurement on the gradient absolute value sequence to determine a groove edge point sequence; an edge point unit for determining a left edge point and a right edge point of each groove according to the groove edge point sequence; a reference point unit for acquiring upper plane reference points of left and right edges of each groove and a groove bottom reference point according to the left edge point and the right edge point of each groove; a reference line unit for fitting a groove upper reference line of each groove according to the upper plane reference points of the left and right edges of each groove; and a groove depth unit for calculating the groove depth of each groove on the workpiece surface according to the groove upper reference line and the groove bottom reference point. On the one hand, the present application can better position each groove by generating the gradient absolute value sequence to generate the groove edge point sequence and further determining the left edge point and right edge point of each groove; and on the other hand, the present application can improve the accuracy of measurement by fitting the groove upper reference line of each groove and calculating, in combination with the groove bottom reference point, the groove depth of each groove on the workpiece surface.

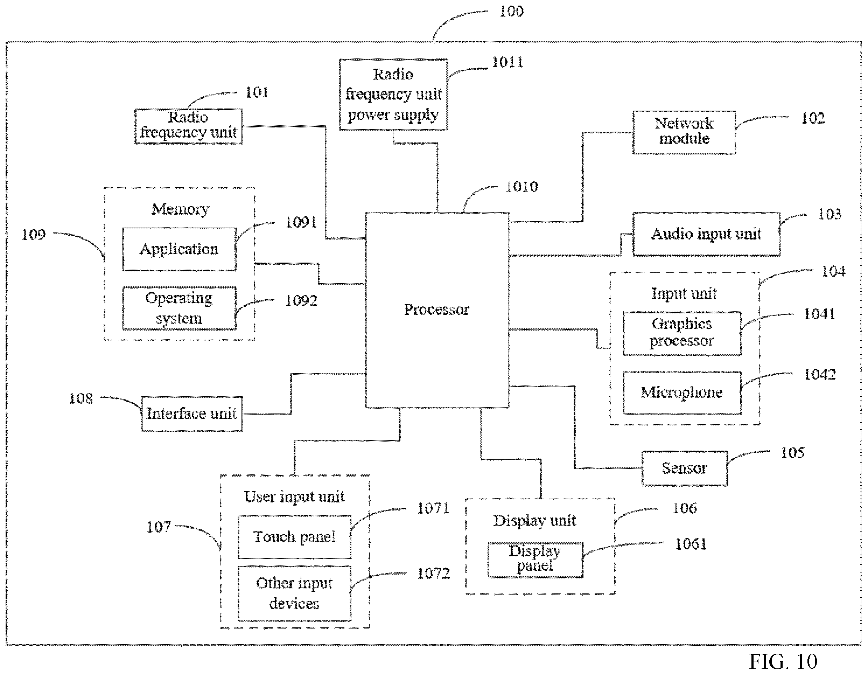

With reference to FIG. 10, FIG. 10 is a schematic diagram showing a hardware structure of a laser measurement device according to various embodiments of the present application;

as shown in FIG. 10, the laser measurement device 100 includes, but is not limited to: a radio frequency unit 101, a network module 102, an audio output unit 103, an input unit 104, a sensor 105, a display unit 106, a user input unit 107, an interface unit 108, a memory 109, a processor 1010, and a power supply 1011, etc. and the laser measurement device 100 further includes a camera. It will be understood by those skilled in the art that the configuration of the laser measurement apparatus shown in FIG. 10 does not constitute a limitation of the laser measurement apparatus, and that the laser measurement apparatus may include more or fewer components than illustrated, or some components may be combined, or a different arrangement of components. In embodiments of the present application, laser measurement devices include, but are not limited to, televisions, cell phones, tablets, laptops, palmtops, vehicle terminals, wearable devices, pedometers, and the like.

A processor 1010 for acquiring a first point cloud data set of a workpiece surface; acquiring a first point cloud data set of a workpiece surface; acquiring a gradient value of each data point in the first point cloud data set to generate a gradient absolute value sequence; performing local maximum value measurement on the gradient absolute value sequence to determine a groove edge point sequence; determining a left edge point and a right edge point of each groove according to the groove edge point sequence; acquiring upper plane reference points of left and right edges of each groove and a groove bottom reference point according to the left edge point and the right edge point of each groove; fitting a groove upper reference line of each groove according to the upper plane reference points of the left and right edges of each groove; and calculating the groove depth of each groove on the workpiece surface according to the groove upper reference line and the groove bottom reference point.

On the one hand, the present application can better position each groove by generating the gradient absolute value sequence to generate the groove edge point sequence and further determining the left edge point and right edge point of each groove; and on the other hand, the present application can improve the accuracy of measurement by fitting the groove upper reference line of each groove and calculating, in combination with the groove bottom reference point, the groove depth of each groove on the workpiece surface.

It should be understood that in the embodiments of the present application, the radio frequency unit 101 can be used for receiving and sending signals in the process of transceiving information or calling, and specifically receives downlink data from a base station and then processes same to the processor 1010; in addition, uplink data is transmitted to the base station. In general, the radio frequency unit 101 includes, but is not limited to, an antenna, at least one amplifier, a transceiver, a coupler, a low noise amplifier, a duplexer, etc. In addition, the radio frequency unit 101 may also communicate with networks and other devices via a wireless communication system.

The laser measurement device 100 provides the user with wireless broadband Internet access through the network module 102, such as facilitating the user to send and receive e-mail, browse web pages, and access streaming media.

The audio output unit 103 may convert the audio data received by the radio frequency unit 101 or the network module 102 or stored in the memory 109 into an audio signal and output as sound. Moreover, the audio output unit 103 may also provide audio output (e.g. call signal receiving sound, message receiving sound, etc.) associated with a particular function performed by the laser measurement device 100. The audio output unit 103 includes a speaker, a buzzer, a receiver, and the like.

The input unit 104 is used for receiving an audio or video signal. The input unit 104 may include a Graphics Processing Unit (GPU) 1041 that processes a still picture or a target image of a video obtained by an image capturing apparatus such as a camera in a video capturing mode or an image capturing mode, and a microphone 1042. The processed image frame may be displayed on the display unit 106. The image frames processed by the graphics processor 1041 may be stored in the memory 109 (or other storage medium) or transmitted via the radio frequency unit 101 or the network module 102. The microphone 1042 can receive sound and can process such sound into audio data. The processed audio data can be converted into a format output that can be transmitted to the mobile communication base station via the radio frequency unit 101 in case of a telephone call mode.

The laser measurement device 100 also includes at least one sensor 105, such as a light sensor, a motion sensor, and other sensors. Specifically, the light sensor includes an ambient light sensor that can adjust the brightness of the display panel 1061 according to the brightness of ambient light and a proximity sensor that can turn off the display panel 1061 and/or backlight when the laser measurement device 100 is moved to the ear. As one type of motion sensor, an accelerometer sensor can detect the magnitude of acceleration in various directions (generally three axes), and can detect the magnitude and direction of gravity when stationary, and can be used for identifying the posture of a laser measurement device (such as horizontal and vertical screen switching, relevant games and magnetometer posture calibration), and vibration identification relevant functions (such as pedometer, tapping), etc.; the sensor 105 may also include a fingerprint sensor, a pressure sensor, an iris sensor, a molecular sensor, a gyroscope, a barometer, a hygrometer, a thermometer, an infrared sensor, etc. which will not be described in detail herein.

The display unit 106 is used for displaying information input by the user or information provided to the user. The display unit 106 may include a display panel 1061, which may be configured in the form of a Liquid Crystal Display (LCD), an Organic Light-Emitting Diode (OLED), etc.

The user input unit 107 may be used to receive input numeric or character information and to generate key signal inputs related to user settings and function controls of the laser measurement device. Specifically, the user input unit 107 includes a touch panel 1071 and other input devices 1072. The touch panel 1071, also referred to as a touch screen, may collect user touch operations on or near it (e.g. user operations on or near the touch panel 1071 using any suitable object or accessory, such as a finger, stylus, etc.). The touch panel 1071 may include two parts, namely a touch detection apparatus and a touch controller. The touch detection apparatus detects a touch orientation of a user, detects a signal brought by a touch operation, and transmits the signal to a touch controller; the touch controller receives touch information from the touch detection apparatus, converts it into contact point coordinates, sends same to the processor 1010, and receives and executes commands sent by the processor 1010. In addition, the touch panel 1071 may be implemented using various types of resistive, capacitive, infrared, and surface acoustic waves. In addition to the touch panel 1071, the user input unit 107 may also include other input devices 1072. Specifically, Other input devices 1072 may include, but are not limited to, a physical keyboard, function keys (such as volume control keys, switch keys, etc.), a trackball, a mouse, a joystick, etc. which will not be described in detail herein.

Further, a touch panel 1071 can be overlaid on the display panel 1061, and when the touch panel 1071 detects a touch operation on or near the touch panel 1071 which transmits to the processor 1010 to determine the type of touch event, and then the processor 1010 provides a corresponding visual output on the display panel 1061 according to the type of the touch event. Although in FIG. 10, the touch panel 1071 and the display panel 1061 implement the input and output functions of the laser input and output functions of the laser measurement device, in some embodiments, the touch panel 1071 may be integrated with the display panel 1061 to implement the input and output functions of the laser measurement device and are not limited herein.

The interface unit 108 is an interface where an external apparatus is connected to the laser measurement device 100. For example, the external apparatus may include a wired or wireless headset port, an external power (or battery charger) port, a wired or wireless data port, a memory card port, a port for connecting to an apparatus having an identification module, an audio input/output (I/O) port, a video I/O port, a headset port, etc. The interface unit 108 may be used to receive input (e.g. data information, power, etc.) from the external apparatus and transmit the received input to one or more elements within the laser measurement device 100 or may be used to transmit data between the laser measurement device 100 and the external apparatus.

A memory 109 may be used to store software programs as well as various data. The memory 109 can mainly include a storage program area and a storage data area, wherein the storage program area can store an application program 1091 (such as a sound playing function, an image playing function, etc.) required by at least one function and an operating system 1092, etc.; the storage data area may store data (e.g. audio data, phonebook, etc.) created according to the use of the handset, etc. In addition, the memory 109 may include a high-speed random-access memory and may also include a non-volatile memory, such as at least one magnetic disk storage device, flash memory device, or other non-volatile solid state storage devices.

The processor 1010 is the control center of the laser measurement device and uses various interfaces and lines to connect various parts of the whole laser measurement device, and performs various functions of the laser measurement device and processes data by running or executing software programs and/or modules stored in the memory 109 and invoking data stored in the memory 109, thereby monitoring the laser measurement device as a whole. The processor 1010 may include one or more processing units; preferably, the processor 1010 may integrate an application processor that primarily handles operating systems, user interfaces, applications, etc. and a modem processor that primarily handles wireless communications. It will be appreciated that the modem processor described above may not be integrated into the processor 1010.

The laser measurement device 100 may also include a power supply 1011 (e.g. a battery) to power the various components. Preferably, the power supply 1011 may be logically connected to the processor 1010 through a power management system to manage charging, discharging, and power consumption.

In addition, the laser measurement device 100 includes some functional modules that are not shown, and reference may be made to the groove depth measurement system provided in the above-described embodiment, which will not be described in detail.

Preferably, the embodiments of the present application also provide a laser measurement device including a processor 1010, a memory 109, a computer program stored on the memory 109 and executable on the processor 1010, wherein the computer program, when executed by the processor 1010, implements the various processes of the above-mentioned embodiments of the groove depth measurement method and can achieve the same technical effect, and the description thereof will not be repeated to avoid repetition.

Embodiments of the present application also provide a computer-readable storage medium, on which a computer program is stored, and the computer program, when executed by one or more processors, realizes the various processes of the above-mentioned embodiments of the groove depth measurement method and can achieve the same technical effect, and in order to avoid repetition, the description thereof will not be repeated. Wherein the computer readable storage medium, such as a Read-Only Memory (ROM), a Random-Access Memory (RAM), a magnetic disk or an optical disk, etc.

The terms "include", "comprise", or any other variation thereof herein are intended to cover a non-exclusive inclusion, such that a process, method, article, or apparatus that includes a list of elements does not include only those elements but may include other elements not expressly listed or inherent to such process, method, article, or apparatus. An element proceeded by the phrase "includes a ..." does not, without more constraints, preclude the existence of additional identical elements in the process, method, article, or apparatus that includes the element.

The apparatus or device embodiments described above are merely illustrative, wherein the unit modules illustrated as separate components may or may not be physically separated, and the components shown as modular units may or may not be physical units, i.e. may be located in one place, or may also be distributed over multiple network modular units. Some or all of the modules may be selected according to actual needs to achieve the purpose of the solution of this embodiment.

From the description of the embodiments given above, it will be clear to a person skilled in the art that the method of the embodiments described above can be implemented by means of software plus a necessary general hardware platform, but of course also by means of hardware, but in many cases the former is a better embodiment. Based on such an understanding, the technical solution of the present application, either substantively or in any part thereof contributing to the prior art, can be embodied in the form of a software product, the computer software product being stored in a storage medium (such as an ROM/RAM, a magnetic diskette, an optical disk), and including instructions for causing a terminal (which may be a mobile terminal, a personal computer, a server, or a network device, etc.) to execute the method of the various embodiments or some parts of the embodiments of the present application.

Finally, it should be noted that: the embodiments described above with reference to the accompanying drawings are only intended to illustrate the technical solution of the present application, and the present application is not limited to the above-mentioned specific embodiments, which are merely illustrative and not restrictive; with the idea of the present application, the technical features in the above embodiments or in different embodiments may also be combined, the steps may be implemented in any order, and there are many other variations of the different aspects of the present application as described above, which are not provided in detail for the sake of brevity; although the present application has been described in detail with reference to the foregoing embodiments, those skilled in the art will appreciate that: the technical solutions disclosed in the above-mentioned embodiments can still be amended, or some of the technical features thereof can be replaced by equivalents; however, these modifications or substitutions do not bring the essence of the corresponding technical solutions out of the scope of the technical solutions of the various embodiments of the present application.

## Claims

1. A groove depth measurement method, **characterized in that** the method is applied to a workpiece surface comprising a plurality of grooves, and the method comprises:

    acquiring a first point cloud data set of a workpiece surface;
    acquiring a gradient value of each data point in the first point cloud data set to generate a gradient absolute value sequence;
    performing local maximum value measurement on the gradient absolute value sequence to determine a groove edge point sequence;
    determining a left edge point and a right edge point of each groove according to the groove edge point sequence;
    acquiring upper plane reference points of left and right edges of each groove and a groove bottom reference point according to the left edge point and the right edge point of each groove;
    fitting a groove upper reference line of each groove according to the upper plane reference points of the left and right edges of each groove; and
    calculating the groove depth of each groove on the workpiece surface according to the groove upper reference line and the groove bottom reference point.

2. The method according to claim 1, **characterized in that** after acquiring the first point cloud data set of the workpiece surface, the method further comprises: pre-processing the first point cloud data set to generate a second point cloud data set, specifically comprising:
    performing rotation pre-processing on the first point cloud data set to generate a second point cloud data set.

3. The method according to claim 2, **characterized in that** the performing rotation preprocessing on the first point cloud data set to generate a second point cloud data set comprises:

    performing filtering processing on the data points in the first point cloud data set, and determining a filtering response value of the data points;
    calculating a weight value corresponding to the data point according to the filtering response value;

according to the weight value corresponding to each data point, combining position information about each data point, fitting a line, and calculating an inclination angle of the fitted line; and

performing rotation pre-processing on the first point cloud data set according to the inclination angle of the fitted line to generate a second point cloud data set.

4. The method according to claim 3, **characterized by** further comprising:
performing interpolation processing on the second point cloud data set to generate a third point cloud data set.

5. The method according to claim 4, **characterized by** further comprising:
performing smooth filtering processing on the third point cloud data set to generate a fourth point cloud data set.

6. The method according to claim 5, **characterized in that** the performing local maximum value measurement on the gradient absolute value sequence to determine a groove edge point sequence comprises:

determining whether a gradient absolute value of the current data point is greater than a preset absolute value threshold;

further determining whether the gradient absolute value of the current data point is a local maximum value within a preset range if the gradient absolute value of the current data point is greater than a preset absolute value threshold;

determining the current data point as a groove edge point to be determined, and adding a groove edge point sequence if the gradient absolute value of the current data point is the local maximum value within the pre-set range;

traversing each data point in the fourth point cloud data set to determine a groove edge point sequence.

7. The method according to claim 6, **characterized in that** the determining a left edge point and a right edge point of each groove according to the groove edge point sequence comprises:

retrieving the groove edge point to be determined in the groove edge point sequence;

skipping the current data point to detect the next data point in the groove edge point sequence if the gradient value of the retrieved current data point is negative;

determining that the current data point is a left edge point of a certain groove, and the next data point of the current data point as a right edge point of the groove if the gradient value of the retrieve current data point is positive, and the gradient value of the next data point is negative; and

traversing all of the groove edge points to be determined in the groove edge point sequence until the left edge point and the right edge point for each groove are determined.

8. The method according to claim 1, **characterized in that** the acquiring upper plane reference points of left and right edges of each groove according to the left edge point and the right edge point of each groove comprises:
acquiring a preset number of data points located to the left of the left edge point as an upper plane reference point to the left of the groove, and acquiring a preset number of data points located to the right of the right edge point as an upper plane reference point to the right of the groove.

9. The method according to claim 1, **characterized in that** the acquiring a groove bottom reference point of each groove according to the left edge point and the right edge point of each groove comprises:
acquiring a data point located between the left edge point and the right edge point as a groove bottom reference point of the groove.

10. The method according to claim 8, **characterized in that** the fitting a groove upper reference line of each groove according to the upper plane reference points of the left and right edges of each groove comprises:

determining an upper plane reference point to the left of the groove as a first reference point set and determining an upper plane reference point to the right of the groove as a second reference point set;

connecting each reference point in the first reference point set with each reference point in the second reference point set to determine a plurality of reference straight lines; and

determining a groove upper reference straight line from the plurality of reference straight lines.

11. The method according to claim 10, **characterized in that** the determining a groove upper reference straight line from the plurality of reference straight lines comprises:

acquiring the number of reference points located above each of the reference straight lines, and determining the reference straight line having the least number of reference points as the groove upper reference straight line.

12. The method according to claim 11, **characterized in that** the calculating the groove depth of each groove on the workpiece surface according to the groove upper reference line and the groove bottom reference point comprises:

> calculating a distance value between each groove bottom reference point and the groove upper reference line;
> ranking the distance values from large to small, and determining a preset number of larger distance values; and
> calculating an average value of the preset number of larger distance values, and determining the average value as a groove depth of the groove.

13. A groove depth measurement apparatus, **characterized in that** the groove depth measurement apparatus is applied to a workpiece surface comprising a plurality of grooves, and the apparatus comprises:

> a point cloud data set unit for acquiring a first point cloud data set of a workpiece surface;
> a gradient absolute value sequence unit for acquiring a gradient value of each data point in the first point cloud data set to generate a gradient absolute value sequence;
> a groove edge point sequence unit for performing local maximum value measurement on the gradient absolute value sequence to determine a groove edge point sequence;
> an edge point unit for determining a left edge point and a right edge point of each groove according to the groove edge point sequence;
> a reference point unit for acquiring upper plane reference points of left and right edges of each groove and a groove bottom reference point according to the left edge point and the right edge point of each groove;
> a reference line unit for fitting a groove upper reference line of each groove according to the upper plane reference points of the left and right edges of each groove; and
> a groove depth unit for calculating the groove depth of each groove on the workpiece surface according to the groove upper reference line and the groove bottom reference point.

14. A laser measurement device, **characterized by** comprising:

> at least one processor; and
> a memory communicatively connected to the at least one processor; wherein
> the memory stores an instruction executable by the at least one processor, and the instruction is executed by the at least one processor to enable the at least one processor to execute the groove depth measurement method according to any of claims 1-12.

15. A groove depth measurement system, **characterized by** comprising:
the laser measurement device according to claim 14 for measuring a groove depth of a workpiece surface, wherein the laser measurement device comprises:

> a camera for taking an image of a workpiece surface; and
> a laser for projecting a laser line onto a workpiece surface.

100

10

11

12

221

21

22

20

FIG. 1

Acquire a first point cloud data set of a workpiece surface — S1

↓

Acquire a gradient value of each data point in the first point cloud data set to generate a gradient absolute value sequence — S2

↓

Perform local maximum value measurement on the gradient absolute value sequence to determine a groove edge point sequence — S3

↓

Determine a left edge point and a right edge point of each groove according to the groove edge point sequence — S4

↓

Acquire upper plane reference points of left and right edges of each groove and a groove bottom reference point according to the left edge point and the right edge point of each groove — S5

↓

Fit a groove upper reference line of each groove according to the upper plane reference points of the left and right edges of each groove — S6

↓

Calculate the groove depth of each groove on the workpiece surface according to the groove upper reference line and the groove bottom reference point — S7

FIG. 2

Filter data points in the two-dimensional point cloud data set, and determine a filtering response value of the data points — S102

Calculate a weight value corresponding to the data point according to the filtering response value — S104

According to the weight value corresponding to each data point, combine position information about each data point, fit a line, and calculating an inclination angle of the fitted line — S106

According to the inclination angle of the fitted line, perform rotation processing on the two-dimensional point cloud data set, and generate a two-dimensional point cloud data set after the rotation pre-processing — S108

FIG. 3

S3

Acquire gradient absolute value sequence — S301

Acquire current data point — S302

S307 — Discard current data point

No ← Determine whether a gradient absolute value of the current data point is greater than a preset absolute-value threshold value — S303

Yes

Determine whether the gradient absolute value of the current data point is a local maximum value within a preset range — S304

No → Acquire next data point for gradient absolute value sequence — S306

Yes

Determine the current data point as a groove edge point to be determined, and add a groove edge point sequence — S305

FIG. 4

S4

| Retrieve the groove edge point to be determined in the groove edge point sequence | S401 |

| Acquire current data point | S402 |

| Skip the current data point | S407

Yes ← Determine whether the gradient value of the current data point is negative | S403

No

Determine whether the gradient value of the next data point of the current data point is negative | S404

No

Yes

| Determine that the current data point is a left edge point of a certain groove, and the next data point of the current data point as a right edge point of the groove | S405

| Acquire next data point | S406

FIG. 5

S6

| Determine an upper plane reference point to the left of the groove as a first reference point set and determine an upper plane reference point to the right of the groove as a second reference point set | S601 |

| Connect each reference point in the first reference point set with each reference point in the second reference point set to determine a plurality of reference straight lines | S602 |

| Determine a groove upper reference straight line from the plurality of reference straight lines | S603 |

FIG. 6

S7

Calculate a distance value between each groove bottom reference point and the groove upper reference straight line — S701

↓

Rank the distance values from large to small, and determining a preset number of larger distance values — S702

↓

Calculate an average value of the preset number of larger distance values, and determine the average value as a groove depth of the groove — S703

FIG. 7

FIG. 8a

FIG. 8b

FIG. 8c

FIG. 8d

FIG. 8e

FIG. 8f

```
x = 12.500000, depth = 4.130832, width = 8.000000
x = 44.250000, depth = 4.598163, width = 9.900000
x = 73.800000, depth = 4.581352, width = 5.400000
outDepth = 4.598163
```

FIG. 8g

Groove depth
measurement apparatus 90

| | |
|---|---|
| Point cloud data set unit | 91 |
| Gradient absolute value sequence unit | 92 |
| Groove edge point sequence unit | 93 |
| Edge point unit | 94 |
| Reference point unit | 95 |
| Reference line unit | 96 |
| Groove depth unit | 97 |

FIG. 9

FIG. 10

## INTERNATIONAL SEARCH REPORT

International application No.

**PCT/CN2022/081674**

| A. | CLASSIFICATION OF SUBJECT MATTER |
|---|---|

G01B 11/22(2006.01)i;  G06T 7/80(2017.01)i

According to International Patent Classification (IPC) or to both national classification and IPC

| B. | FIELDS SEARCHED |
|---|---|

Minimum documentation searched (classification system followed by classification symbols)

G01B; G06T

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; IEEE: 深圳市道通科技股份有限公司, 凹槽, 沟, 槽, 坑, 深度, 高度, 边缘, 边界, 梯度, 极大值, 最大值, 序列, angle, depth, groove, edge, gradient, calibra+, cave, defect

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 113280752 A (AUTEL INTELLIGENT TECHNOLOGY CORP., LTD.) 20 August 2021 (2021-08-20)<br>claims 1-15 | 1-15 |
| X | CN 112651968 A (GUANGDONG UNIVERSITY OF TECHNOLOGY) 13 April 2021 (2021-04-13)<br>description, paragraphs [0006]-[0030], and figures 1-10 | 1, 2, 8-15 |
| A | CN 108592847 A (OPPO (CHONGQING) INTELLIGENT TECHNOLOGY CO., LTD.) 28 September 2018 (2018-09-28)<br>entire document | 1-15 |
| A | CN 112683191 A (AUTEL INTELLIGENT TECHNOLOGY CORP., LTD.) 20 April 2021 (2021-04-20)<br>entire document | 1-15 |
| A | JP 2001118832 A (TOSHIBA CORP.) 27 April 2001 (2001-04-27)<br>entire document | 1-15 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 May 2022** | **01 June 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/081674**

| Patent document cited in search report | | | Publication date (day/month/year) | Patent family member(s) | | | Publication date (day/month/year) |
|---|---|---|---|---|---|---|---|
| CN | 113280752 | A | 20 August 2021 | None | | | |
| CN | 112651968 | A | 13 April 2021 | CN | 112651968 | B | 07 September 2021 |
| CN | 108592847 | A | 28 September 2018 | None | | | |
| CN | 112683191 | A | 20 April 2021 | None | | | |
| JP | 2001118832 | A | 27 April 2001 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110430193